# EUROPÄISCHE PATENTSCHRIFT

(11) **EP 2 765 374 B1**
(45) Veröffentlichungstag und Bekanntmachung des Hinweises auf die Patenterteilung: **19.09.2018**
(21) Anmeldenummer: 13401121.2
(22) Anmeldetag: 20.11.2013
(51) Int. Cl.: F25D 23/02

(54) **Haushaltsgerät und Verfahren zum automatisierten Öffnen mindestens einer Tür dieses Haushaltsgerätes**
Domestic appliance and method for the automated opening at least one door of this household appliance
Appareil ménager et procédé d'ouverture automatique d'au moins une porte de cet appareil ménager

(30) Priorität: 07.02.2013 DE 102013101204
(43) Veröffentlichungstag der Anmeldung: 13.08.2014
(73) Patentinhaber: Miele & Cie. KG, 33332 Gütersloh (DE)
(72) Erfinder: Heidemann, Tobias, 49328 Melle (DE); Tembaak, Jutta, 49492 Westerkappeln (DE)

(56) Entgegenhaltungen:
- WO-A1-01/23816
- WO-A2-2012/159938
- DE-A1-102011 010 906
- JP-A- 2006 078 001

## Beschreibung

Die Erfindung betrifft ein Haushaltsgerät, das einen Korpus und eine mit dem Korpus verbundene Tür aufweist, die zum Öffnen und Verschließen des Korpus dient. Diese Tür ist mit einem auf die Tür einwirkenden Öffnungsmechanismus gekoppelt, wobei mindestens ein Steuerungssignal eines Näherungssensors zur Ansteuerung dieses Öffnungsmechanismus nutzbar ist.

Grundsätzlich ist es bekannt, Sensoren zur Ansteuerung von Öffnungsmechanismen an Haushaltsgeräten zum Einsatz zu bringen.
So geht aus der KR 10 2001 0092060 A am Beispiel eines Kühlschrankes ein Haushaltsgerät hervor, an dessen Frontseite ein Sensor vorgesehen ist, der auf akustische Signale reagiert. Empfängt dieser Sensor beispielsweise ein Stimmensignal, so wird durch dieses Steuerungssignal ein Öffnungsmechanismus angesteuert, bei dem es sich nach dem Offenbarungsgehalt der Schrift um einen Elektromagnet-Mechanismus handelt. Hierbei besteht jedoch die Gefahr, dass akustische Signale jeglicher Art zum Öffnen der Tür des Kühlschrankes führen. So ist es sogar vorstellbar, dass auch sich unterhaltende Personen in der Nähe des Kühlschrankes ein in diesem Fall unerwünschtes Steuerungssignal auslösen. Jede unnötige Öffnung der Tür des Kühlschrank führt jedoch zu Energieverlusten, die möglichst vermieden werden sollten.

Die KR 10 2000 10074381 A betrifft darüber hinaus ebenfalls einen Kühlschrank, dessen Öffnungsmechanismus mit einem Infrarot-Sensor gekoppelt ist. Dieser Infrarot-Sensor misst hierbei die Körpertemperatur einer sich dem Kühlschrank nähernden Person. Ein Nachteil dieser Lösung ist darin zu sehen, dass gegebenenfalls auch eine Annäherung von Haustieren beziehungsweise jedwede Annäherung einer Person an den Kühlschrank zum Öffnen der Tür führt. Folglich lassen sich auch hiermit fehlerhafte Ansteuerungen der Tür kaum verhindern. Wird ein Infrarot-Sensor zudem in ein den Sensor vor Feuchtigkeit und Verunreinigungen schützendes Gehäuse eingesetzt, was bei einem Haushaltsgerät durchaus erforderlich sein kann, muss das Gehäuse aus einem das Infrarotsignal nicht hindernden, speziellen Werkstoff bestehen. Zudem hat sich als nachteilig herausgestellt, dass ein Infrarot-Sensor lediglich ein einzelnes Signal bereitstellt und damit nur begrenzte Steuerungsmöglichkeiten bietet.

Einen anderen Weg geht die KR 10 2001 00085275 A, bei der ein Kühlschrank mit einem Näherungssensor zum Einsatz kommt, dessen Steuerungssignal einen Öffnungsmechanismus mit einem Elektromagneten ansteuert. Der Näherungssensor wird dabei an der Tür oder am Korpus des Kühlschrankes angeordnet, was den Nachteil mit sich bringt, dass der Sensor in die Oberfläche der Tür beziehungsweise des Korpus integriert ist und damit der gestalterischen Freiheit Grenzen gesetzt sind, weil die Oberfläche der Tür beziehungsweise des Korpus optisch unterbrochen wird. Ein weiterer Nachteil dieser Lösung besteht ferner darin, dass der in die Tür oder den Korpus integrierte Sensor verschmutzen kann und damit gegebenenfalls seine Funktionsfähigkeit beeinträchtigt wird.

Die KR 10 2009 0043993 A betrifft schließlich eine hierzu vergleichbare Lösung, wobei der Näherungssensor hierbei unmittelbar in einer Höhe in die Tür eingebracht ist, die in etwa der Augenhöhe einer Person entspricht. Dies hat zur Folge, dass der Sensor auffällig in der Front der Tür angebracht werden muss und damit den optischen Gesamteindruck des Kühlschrankes in erheblichem Maße beeinträchtigt.

Die WO 2012/159 938 A2 offenbart ein Haushaltsgerät gemäß dem Oberbegriff von Anspruch 1 und beschreibt einen Schrank für den Einbau eines Haushaltgerätes, mit einer motorische angetriebenen Tür. Mittels einer im Mittenbereich der Tür angebrachten Sensorik, die in einer Ausführungsform als Radarsensor ausgebildet ist, wird der Öffnungswunsch des Benutzers sensiert.

Aus der JP 2006 078 001 A oder der DE 10 2011 010 906 A1 ist ein Kühlschrank bekannt, der eine Tür mit einer Türöffnungsunterstützung umfasst. Als Sensorik ist auch hier ein Radarsensor vorgesehen, der gemäß der in der DE 10 2011 010 906 A1 genannten Ausführung in der Tür angebracht ist.

Darüber hinaus sind ganz allgemein auch Anwendungsfälle bekannt, bei denen Ultraschall-Sensoren zum Einsatz kommen, die an Haushaltsgeräten einen Öffnungsmechanismus ansteuern, der zur Betätigung der Tür dient. Ultraschall-Sensoren haben jedoch den Nachteil, dass man hierbei einen Sender und einen Empfänger benötigt, die voneinander getrennt angeordnet werden müssen, was auch einen entsprechenden Bauraum erfordert. Derartige Lösungen haben sich jedoch auch deshalb nicht als praxisrelevant bewährt, weil Ultraschall-Sensoren in jedem Fall gegen Spritzwasser geschützt an dem Haushaltsgerät zu befestigen sind, so dass der Aufwand für den Einsatz derartiger Sensoren insgesamt erheblich ist.

Der Erfindung stellt sich somit das Problem, ein Haushaltsgerät bereitzustellen, das mit einem einfachen Näherungssensor ausgestattet ist, der zuverlässig Steuerungssignale liefert, die mehrere Steuerungsmöglichkeiten bieten.

Darüber hinaus ist ein Verfahren zum automatisierten Öffnen der Tür dieses Haushaltsgerätes anzugeben.

Erfindungsgemäß wird dieses Problem durch ein Haushaltsgerät mit den Merkmalen des Patentanspruchs 1 und durch ein Verfahren gemäß dem Patentanspruch 9 gelöst.

Vorteilhafte Ausgestaltungen und Weiterbildungen der Erfindung ergeben sich aus den jeweils nachfolgenden Unteransprüchen.

Ein Haushaltsgerät mit einem Korpus und einer mit dem Korpus verbundenen Tür sowie mit einem auf die Tür einwirkenden Öffnungsmechanismus und mit mindestens einem Näherungssensor, dessen Steuerungssignal zur Ansteuerung des Öffnungsmechanismus nutzbar ist wurde erfindungsgemäß dahingehend weitergebildet, dass der Näherungssensor ein Radarsensor ist.

Im Unterschied zu den eingangs genannten Infrarot-Sensoren, die nur Objekte mit einer Temperaturdifferenz zum Hintergrund registrieren können, reagieren Radarsensoren auf Bewegungen im Erfassungsbereich des Radarsensors. Dabei bestehen die mit der Erfindung erreichbaren Vorteile darin, dass die Bewegungsempfindlichkeit des Radarsensors extrem hoch ist. Selbst geringste Bewegungen im Erfassungsbereich des Radarsensors werden erkannt. Die Empfindlichkeit des Radarsensors kann zudem über geeignete Mittel, wie beispielsweise Potentiometer in weiten Grenzen eingestellt werden, so dass eine optimale Anpassung an die jeweiligen Bedingungen gegeben ist. Radarsensoren sind durch viele Werkstoffe hindurch wirksam. So stellt beispielsweise Kunststoff kein Hindernis für einen Radarsensor dar. Dies ist von Vorteil, wenn der Radarsensor, wie bei einem Haushaltsgerät, vor Verunreinigungen und Feuchtigkeit geschützt, in einem Gehäuse untergebracht werden soll. Ein weiterer, sehr wesentlicher Vorzug derartiger Radarsensoren besteht darin, dass sie bereits mit Betriebsspannungen von 8 bis 15 V auskommen, was ihren Einsatz auch in Kraftfahrzeugen oder in Wohnmobilen ermöglicht. Bei dem Radarsensor handelt es sich erfindungsgemäß vorzugsweise um einen hochintegrierten Radarsensor mit Sende- und Empfangsteil. Ein besonderer Vorzug des Radarsensors besteht jedoch auch darin, dass dieser in der Lage ist, sowohl die Geschwindigkeit eines Objektes, als auch ihre Bewegungsrichtung zu erfassen. Dies führt zu der Möglichkeit, mit nur einem Sensor mehrere Steuerungssignale zu erzeugen und damit beispielsweise redundante Signale zur Vermeidung von Fehlschaltungen zu verwenden oder verschiedene Türen eines Haushaltsgerätes beziehungsweise mehrere Türen an unterschiedlichen Haushaltsgeräten anzusteuern. Die Einsatzvielfalt eines derartigen Radarsensors ist erheblich und setzt dem gestalterischen Spielraum kaum Grenzen. Ein weiterer und nicht unerheblicher Vorteil der Erfindung ist darüber hinaus darin zu sehen, dass mit dem Radarsensor ausgestattete Haushaltsgeräte auch körperbehinderten Personen problemlos das Öffnen und Schließen der Tür(-en) ermöglichen, selbst dann, wenn diese Personen aus gesundheitlichen Gründen nicht in der Lage sind, eine zum Öffnen der Tür erforderliche Kraft aufzubringen. Insofern stellt die Erfindung eine starke Erleichterung im Alltagsleben derartiger Menschen dar.

Eine erste Ausgestaltung der Erfindung besteht darin, dass die Tür des Haushaltsgerätes eine grifffreie Außenfront aufweist. Da der Radarsensor einen begrenzten Erfassungsbereich aufweist, kann er an einem Einbauort des Haushaltsgerätes platziert werden, an dem er optisch nicht auffällt. So ist es beispielsweise möglich, den Radarsensor sichtgeschützt unterzubringen. Mit dieser Maßnahme wird den modernen, gestalterischen Ansprüchen an Haushaltsgeräte in vortrefflicher Weise Genüge getan.

Erfindungsgemäß funktionierende Radarsensoren sind entsprechend einer anderen Weiterbildung der Erfindung als Doppelradar ausgeführt und arbeiten nach dem so genannten Dopplerprinzip. Dabei werden die im Mikrowellenbereich ausgesendeten elektromagnetischen Wellen am Objekt reflektiert und anschließend wieder erfasst, wobei zum Beispiel mit Hilfe eines Mischers eine Überlagerung des Sendesignals erfolgen kann. Die Frequenz des Signals ist dabei der Geschwindigkeit proportional. So entsprechen beispielsweise 44 Hz einer Bewegungsgeschwindigkeit von circa 1 km/h. Die Amplitude des Signals ergibt sich aus der Größe des Objekts und seinem Abstand zum Sensor. Sofern die Signalspannung des Radarsensors zu gering sein sollte, kann problemlos ein nachgeschalteter Verstärker mit definierter Bandbreite zum Einsatz kommen, um das Signal auf einen Nutzpegel anzuheben, der dann ausgewertet werden kann.

Ein ganz wesentlicher Vorzug der Erfindung wird darin gesehen, dass der Radarsensor optisch verdeckt, an der Unterseite der Tür oder an der Unterseite des mit der Tür) ausgestatteten Haushaltsgerätes, also beispielsweise an der Unterseite des Korpus des Haushaltsgerätes angeordnet ist. Als "Unterseite" wird der Teil des Haushaltsgerätes betrachtet, der bei einem korrekt aufgebauten Haushaltsgerät auch mit seinem Fußbereich verglichen werden kann. Mit anderen Worten wird die Unterseite eines Haushaltsgerätes immer der bodennahe Abschnitt oder der dem Boden zugewandte Teil des Haushaltsgerätes sein. Durch die damit gegebene Möglichkeit, den Radarsensor optisch verdeckt anzuordnen, werden die Gestaltungsspielräume bei der Ausführung des Haushaltsgerätes wesentlich erweitert. So ist es beispielsweise möglich, die Außenfront des Haushaltsgerätes grifffrei und ohne Unterbrechungen oder Erhebungen beziehungsweise ohne störende An- oder Vorbauten zu gestalten. Damit lassen sich nicht nur Verletzungsgefahren durch hervorstehende Bauteile verhindern. Es ist ferner von Vorteil, dass das Haushaltsgerät optisch ansprechend gestaltet werden kann und zudem einfacher zu reinigen ist, als bekannte Lösungen.

Bei Haushaltsgeräten besteht ein besonderes Problem darin, dass diese häufig mit Feuchtigkeit beaufschlagt werden, wenn sie beispielsweise in einer Küche oder einem Bad aufgestellt sind. Zudem ist in jedem Fall die Gefahr von Verunreinigungen gegeben, so dass es von Vorteil ist, wenn der Radarsensor geschützt untergebracht werden kann. Wie eingangs bereits ausgeführt wurde, eignen sich Radarsensoren insbesondere deshalb für die Umsetzung der Erfindung, weil sie relativ unempfindlich sind und auch Kunststoffe und andere Werkstoffe durchdringen können. Aus diesem Grund wird vorgeschlagen, den Radarsensor in einem Gehäuse unterzubringen. Auf diese Weise wird seine Funktion nicht beeinträchtigt und er ist dennoch vor Beschädigungen durch mechanische Beanspruchung, Feuchtigkeit oder vor Verunreinigungen geschützt.

Ein wesentlicher Aspekt der Erfindung ist die zuverlässige Funktionalität des Radarsensors. Aus diesem Grund ist es sinnvoll, wenn der Erfassungsbereich des Radarsensors relativ klein gehalten wird und beispielsweise zwischen 0,5 mm und 200 mm beträgt. Auf diese Weise kann verhindert werden, dass Bewegungen, die weiter von dem Haushaltsgerät entfernt stattfinden einen Einfluss auf den Radarsensor ausüben. Mit anderen Worten werden von dem Radarsensor nur Bewegungen oder Geschwindigkeiten erfasst, die in unmittelbarer Nähe des Radarsensors erfolgen und zur Ansteuerung des Öffnungsmechanismus der entsprechenden Tür erwünscht sind.

Da mit Hilfe eines einzelnen Radarsensors in Abhängigkeit der detektierten Bewegungsrichtung mehrere Steuerungssignale erzeugbar sind, kann ein einzelner Radarsensor nach der Erfindung auch beispielsweise zur Ansteuerung mehrerer Türen Verwendung finden. Wird der Radarsensor zum Beispiel an der Unterseite der Tür des Haushaltsgerätes befestigt und ein Fuß der sich dem Haushaltsgerät nähernden Person von links nach rechts bewegt, so kann damit eine erste Tür und durch eine Bewegung des Fußes von rechts nach links, also in der Gegenrichtung, eine weitere Tür angesteuert werden. Die Ansteuerung des Öffnungsmechanismus der Tür ist auf diese Weise baulich sehr einfach umsetzbar.

Eine alternative Lösung hierzu besteht darin, dass die Tür mehrere, beabstandet zueinander, an der Unterseite der Tür und/oder an der Unterseite des mit der Tür ausgestatteten Haushaltsgerätes angeordnete Radarsensoren aufweist. Der Grundgedanke dieses Vorschlages geht folglich dahin, mehrere, vorzugsweise zwei Radarsensoren vorzusehen, so dass sich dadurch die Vielfalt der erzeugbaren Steuerungssignale erhöht. Die Einsatzbereite einer derartigen Lösung ist nur annähernd vorstellbar, wenn man weiß, dass Radarsensoren in der Lage sind, Bewegungen eines sich nähernden Objektes in unterschiedlichen Koordinatenrichtungen zu erfassen und zudem sich ändernde Geschwindigkeiten zu messen.

Ein Haushaltsgerät im Sinne der Erfindung kann ein Kühlgerät, eine Waschmaschine, ein Trockner oder ein Herd sein. Diese beispielhafte Aufzählung ist nicht abschließend, so dass ein Radarsensor in seiner speziellen Verwendung für den hier angegebenen Zweck sehr flexibel und multivalent einsetzbar ist.

Das erfindungsgemäße Verfahren zum automatisierten Öffnen mindestens einer Tür eines Haushaltsgerätes ist durch folgende Verfahrensschritte gekennzeichnet:
- Annäherung einer Person an die Tür,
- Bewegung eines Gegenstandes oder einer Gliedmaße in den Erfassungsbereich des Radarsensors zur Erzeugung eines Steuerungssignals,
- Nutzung dieses Steuerungssignals zur Aktivierung des Öffnungsmechanismus.

Je nach Anordnung des Radarsensors an dem Haushaltsgerät ist es folglich möglich, mit einem Gegenstand oder einer Gliedmaße die Aktivierung des Radarsensors auszulösen. Dies ist insbesondere von Vorteil, weil ein derartiger Radarsensor zum Beispiel im Fußbereich des Haushaltsgerätes vorgesehen werden kann, so dass seine Aktivierung mit dem Fuß möglich wird. Darüber hinaus sind jedoch auch Ausgestaltungen denkbar, die eine Aktivierung des Radarsensors mittels Hand oder Kopf ermöglichen. Diese Variante ist insbesondere für körperlich behinderte Personen von Bedeutung und stellt eine wesentliche Verbesserung der persönlichen Unabhängigkeit dieser Menschen dar.

Eine sehr vorteilhafte Ausgestaltung des erfindungsgemäßen Verfahrens ist auch darin zu sehen, dass Öffnungsmechanismen mehrerer Türen unabhängig voneinander durch nur einen, gemeinsamen Radarsensor ansteuerbar sind, indem je Bewegungsrichtung des Gegenstandes oder einer Gliedmaße je eine Bewegungsrichtung detektiert wird, sodass das dadurch erzeugte Steuerungssignal den hierzu korrespondierenden Öffnungsmechanismus je einer Tür ansteuert. Neben der erwähnten Bewegungsrichtung zur Detektierung eines Steuerungssignals lässt sich eine Steuerung auch über die Änderung der Geschwindigkeit innerhalb des Erfassungsbereich des Radarsensors vornehmen. Damit wird auch deutlich, dass ein Radarsensor vielfältige Ansteuerungsmöglichkeiten für Haushaltsgeräte bietet.

Alternativ hierzu wird vorgeschlagen, dass an der Unterseite der Tür oder an der Unterseite des Haushaltsgerätes beziehungsweise des Korpus des Haushaltsgerätes, mehrere Radarsensoren vorhanden sind, wobei jeder der Radarsensoren zur Ansteuerung je eines Öffnungsmechanismus je einer Tür dient.

Die Erfindung wird nachfolgend anhand der beigefügten Zeichnungen näher erläutert. Die gezeigten Ausführungsbeispiele stellen dabei keine Einschränkung auf die dargestellten Varianten dar, sondern dienen lediglich der Erläuterung eines Prinzips der Erfindung. Gleiche oder gleichartige Bauteile werden stets mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt:
Figur 1: eine Seitenansicht eines Haushaltsgerätes mit einem Radarsensor und einem Teilschnitt
   und
Figur 2: eine perspektivische Darstellung eines weiteren Haushaltsgerätes mit zwei Radarsensoren im Fußbereich des Haushaltsgerätes.

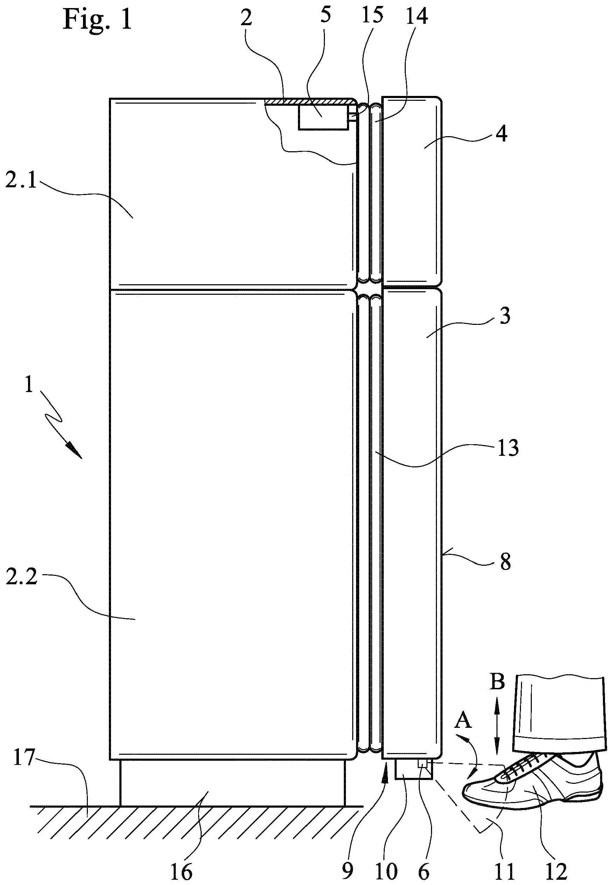

Bei der in der Figur 1 gezeigten Variante eines Haushaltsgerätes 1 handelt es sich um eine Kühlgerätekombination, im besonderen um eine Kombination aus einem Gefrierschrank 2.1 und einem Kühlschrank 2.2, die jeweils einen Korpus 2 aufweisen. Der Gefrierschrank 2.1 ist hierbei auf den Kühlschrank 2.2 aufgesetzt. Zum Verschließen des Kühlschrankes 2.2 dient eine Tür 3, wobei der Gefrierschrank 2.1 durch eine Tür 4 geschlossen werden kann. Zwischen dem Korpus 2 des Kühlschrankes 2.2 und der Tür 3 befindet sich darüber hinaus eine umlaufende Dichtung 13 und zwischen dem Korpus 2 des Gefrierschrankes 2.1 und der Tür 4 eine ebenfalls umlaufende Dichtung 14. Die Dichtungen 13, 14 bestehen jeweils aus einem weichelastischen Gummiwerkstoff und verhindern das Eindringen warmer Umgebungsluft in den Innenraum des Gefrierschrankes 2.1 beziehungsweise des Kühlschrankes 2.2, wenn die Türen 3, 4 verschlossen sind. In dem im oberen Teil des Gefrierschrankes 2.1 gezeigten Teilschnitt ist andeutungsweise ein Öffnungsmechanismus 5 dargestellt, der über einen in Längsrichtung ausfahrbaren Stößel 15 verfügt, bei dessen Aktivierung eine Kraft auf die Tür 4 ausgeübt wird, so dass die Dichtung 14 zwischen dem Korpus 2 des Gefrierschrankes 2.1 und der Tür 4 ihre Wirkung verliert und sich die Tür 4 öffnet. Ein analoger Öffnungsmechanismus ist natürlich auch bei dem Kühlschrank 2.2 vorhanden, wurde jedoch aus Vereinfachungsgründen in der Figur 1 nicht separat dargestellt. Zur Ansteuerung des Öffnungsmechanismus 5 dient ein an der Unterseite 9 der Tür 3 des Kühlschrankes 2.2 angeordneter Radarsensor 6, der seinerseits in einem Gehäuse 10 geschützt untergebracht ist. Da das Haushaltsgerät 1 insgesamt auf einem Fußsockel 16 aufgestellt ist, besteht ein Höhenabstand zwischen dem Boden 17 und der Unterseite des Radarsensors 6. Dieser als "Fußfreiheit" zu betrachtende Höhenabstand ist dazu nutzbar, mit einem Fuß 12 einer sich dem Haushaltsgerät 1 nähernden Person in den Erfassungsbereich 11 des Radarsensors 6 einzudringen und dadurch ein Steuerungssignal auszulösen. Da Radarsensoren allgemein in der Lage sind, Bewegungen in unterschiedlicher Richtungen zu erfassen, kann ein Steuerungssignal beispielsweise durch ein seitliches Verschwenken des Fußes 12 in Richtung des Doppelpfeils "A" erzeugt werden. Eine andere, ebenfalls in der Darstellung der Figur 1 gezeigte Möglichkeit der Auslösung eines Steuerungssignals besteht darin, den Fuß 12 vertikal, also in Richtung des Doppelpfeils "B" zu bewegen. Durch die Möglichkeit der Erfassung mehrerer Bewegungsrichtungen, können die Türen 3 und 4 des Gefrierschrankes 2.1 beziehungsweise des Kühlschrankes 2.2 unabhängig voneinander angesteuert werden, so dass je nach Bedarf das eine oder andere Gerät geöffnet werden kann. Der wesentliche Vorzug dieser Lösung besteht darin, dass das gesamte Haushaltsgerät 1 grifffrei und mit einer einheitlichen, ebenen, von Unterbrechungen freien Außenfront 8 gestaltet werden kann.

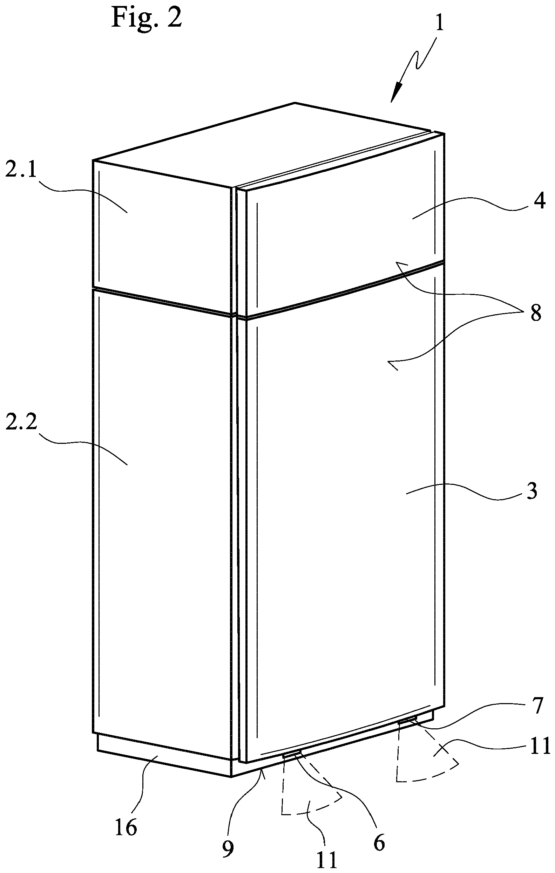

Ein ähnliches Haushaltsgerät 1, wie es im Zusammenhang mit der Figur 1 beschrieben wurde, geht aus der Figur 2 in perspektivischer Ansicht hervor. Auch hierbei handelt es sich um eine Kombination aus einem Gefrierschrank 2.1 und einem Kühlschrank 2.2, wobei der Gefrierschrank 2.1 durch eine Tür 4 und der Kühlschrank 2.2 durch eine Tür 3 verschlossen ist. Die Außenfronten 8 der Türen 3, 4 sind grifffrei gestaltet und weisen damit keine hervorstehenden Bauteile oder Unterbrechungen der Oberfläche auf. Die Besonderheit der in Figur 2 gezeigten Variante besteht darin, dass im Bereich des Fußsockels 16, also an der Unterseite 9 des Haushaltsgerätes 1, zwei mit einem Abstand zueinander angeordnete Radarsensoren 6 und 7 angeordnet sind. Jeder der Radarsensoren 6 und 7 weist einen eigenen Erfassungsbereich 11 auf, der dazu nutzbar ist, eine Gliedmaße oder einen Gegenstand in den Erfassungsbereich 11 einzuführen, so dass beispielsweise mit dem Radarsensor 6 die Tür 4 des Gefrierschrankes 2.1 und mit dem Radarsensor 7 die Tür 3 des Kühlschrankes 2.2 oder umgekehrt, ansteuerbar ist. Berücksichtigt man ferner, dass mit jedem der Radarsensoren 6, 7 mehrere Bewegungsrichtungen erfassbar sind, so können mit den beiden Radarsensoren 6, 7 auch weitere Funktionen des Haushaltsgerätes 1 umgesetzt beziehungsweise angesteuert werden.

### BEZUGSZEICHENLISTE:

- 1: Haushaltsgerät
- 2: Korpus
- 2.1: Gefrierschrank
- 2.2: Kühlschrank
- 3: Tür
- 4: Tür
- 5: Öffnungsmechanismus
- 6: Radarsensor
- 7: Radarsensor
- 8: Außenfront
- 9: Unterseite
- 10: Gehäuse
- 11: Erfassungsbereich
- 12: Fuß
- 13: Dichtung
- 14: Dichtung
- 15: Stößel
- 16: Fußsockel
- 17: Boden

## Patentansprüche

1. Haushaltsgerät (1) mit einem Korpus (2) und einer mit dem Korpus (2) verbundenen Tür (3, 4), ferner mit einem auf die Tür einwirkenden Öffnungsmechanismus (5) und mit mindestens einem Näherungssensor (6, 7), dessen Steuerungssignal zur Ansteuerung des Öffnungsmechanismus (5) nutzbar ist,
wobei der Näherungssensor (6, 7) ein Radarsensor ist, der optisch verdeckt ist, **dadurch gekennzeichnet, dass** der Radarsensor (6, 7) an der Unterseite (9) der Tür (3, 4) oder an der Unterseite des mit der Tür (3, 4) ausgestatteten Haushaltsgerätes (1) angeordnet ist.

2. Haushaltsgerät nach Anspruch 1,
**dadurch gekennzeichnet, dass**
die Tür (3, 4) eine grifffreie Außenfront (8) aufweist.

3. Haushaltsgerät nach einem der vorstehend genannten Ansprüche,
**dadurch gekennzeichnet, dass**
der Radarsensor (6, 7) Bestandteil eines Doppelradars ist.

4. Haushaltsgerät nach einem der vorstehend genannten Ansprüche,
**dadurch gekennzeichnet, dass**
der Radarsensor (6, 7) in einem Gehäuse (10) aufgenommen ist.

5. Haushaltsgerät nach einem der vorstehend genannten Ansprüche,
**dadurch gekennzeichnet, dass**
der Erfassungsbereich (11) des Radarsensors (6, 7) zwischen 0,5 mm und 200 mm beträgt.

6. Haushaltsgerät nach einem der vorstehend genannten Ansprüche,
**dadurch gekennzeichnet, dass**
ein einzelner Radarsensor (6, 7) in Abhängigkeit der detektierten Bewegungsrichtung zur Ansteuerung mehrerer Türen (3, 4) geeignet ist.

7. Haushaltsgerät nach einem der Ansprüche 1 bis 5,
**dadurch gekennzeichnet, dass**
die Tür (3, 4) mehrere, beabstandet zueinander, an der Unterseite (9) der Tür (3, 4) und/oder an der Unterseite des mit der Tür (3, 4) ausgestatteten Haushaltsgerätes (1) angeordnete Radarsensoren (6, 7) aufweist.

8. Haushaltsgerät nach einem der vorstehend genannten Ansprüche,
**dadurch gekennzeichnet, dass**
das Haushaltsgerät ein Kühlgerät, eine Waschmaschine, ein Trockner oder ein Herd ist.

9. Verfahren zum automatisierten Öffnen mindestens einer Tür (3, 4) eines Haushaltsgerätes (1) nach einem der vorstehend genannten Ansprüche, **gekennzeichnet durch** folgende Verfahrensschritte:
- Annäherung einer Person an die Tür (3, 4),
- Bewegung eines Gegenstandes oder einer Gliedmaße (12) in den Erfassungsbereich (11) des Radarsensors (6, 7) zur Erzeugung eines Steuerungssignals,
- Nutzung dieses Steuerungssignals zur Aktivierung des Öffnungsmechanismus (5).

10. Verfahren nach Anspruch 9,
**dadurch gekennzeichnet, dass**
Öffnungsmechanismen (5) mehrerer Türen (3, 4) unabhängig voneinander durch nur einen, gemeinsamen Radarsensor (6, 7) ansteuerbar sind, indem je Bewegungsrichtung des Gegenstandes oder einer Gliedmaße (12) je eine Bewegungsrichtung detektiert wird, sodass das dadurch erzeugte Steuerungssignal den hierzu korrespondierenden Öffnungsmechanismus (5) je einer Tür (3 oder 4) ansteuert.

11. Verfahren nach Anspruch 9 oder 10,
**dadurch gekennzeichnet, dass**
an der Unterseite (9) der Tür (3, 4) oder an der Unterseite des Haushaltsgerätes (1) mehrere Radarsensoren (6, 7) vorhanden sind, wobei jeder der Radarsensoren (6, 7) zur Ansteuerung je eines Öffnungsmechanismus (5) je einer Tür (3, 4) dient.

## Claims

1. Domestic appliance (1) comprising a carcass (2) and a door (3, 4) that is connected to the carcass (2), further comprising an opening mechanism (5), which acts on the door, and comprising at least one proximity sensor (6, 7), the control signal of which can be used to activate the opening mechanism (5),
the proximity sensor (6, 7) being a radar sensor that is concealed from view,
**characterised in that**
the radar sensor (6, 7) is arranged on the underside (9) of the door (3, 4) or on the underside of the domestic appliance (1) equipped with the door (3, 4).

2. Domestic appliance according to
claim 1, **characterised in that**
the door (3, 4) has an external front face (8) without a handle.

3. Domestic appliance according to either of the preceding claims,
**characterised in that**
the radar sensor (6, 7) is a component of a Doppler radar.

4. Domestic appliance according to any of the preceding claims,
**characterised in that**
the radar sensor (6, 7) is accommodated in a housing (10).

5. Domestic appliance according to any of the preceding claims,
**characterised in that**
the detection range (11) of the radar sensor (6, 7) is between 0.5 mm and 200 mm.

6. Domestic appliance according to any of the preceding claims,
**characterised in that**
a single radar sensor (6, 7) is suitable for activating a plurality of doors (3, 4) on the basis of the detected direction of movement.

7. Domestic appliance according to any of claims 1 to
5, **characterised in that**
the door (3, 4) comprises a plurality of radar sensors (6, 7) arranged so as to be spaced apart from one another on the underside (9) of the door (3, 4) and/or on the underside of the domestic appliance (1) equipped with the door (3, 4).

8. Domestic appliance according to any of the preceding claims,
**characterised in that**
the domestic appliance is a refrigerator, a washing machine, a dryer or a cooker.

9. Method for opening at least one door (3, 4) of a domestic appliance (1) in an automated manner according to any of the preceding claims, **characterised by** the following method steps:
- a person approaching the door (3, 4),
- moving an object or a limb (12) into the detection range (11) of the radar sensor (6, 7) in order to generate a control signal,
- using said control signal to activate the opening mechanism (5).

10. Method according to claim 9,
**characterised in that**
opening mechanisms (5) of a plurality of doors (3, 4) can be activated independently of one another by means of only one common radar sensor (6, 7), by a direction of movement being detected for each direction of movement of the object or a limb (12), such that the control signal generated thereby activates the corresponding opening mechanism (5) of the relevant door (3 or 4).

11. Method according to either claim 9 or
claim 10, **characterised in that**
there is a plurality of radar sensors (6, 7) on the underside (9) of the door (3, 4) or on the underside of the domestic appliance (1), each of the radar sensors (6, 7) being used to activate an opening mechanism (5) of the relevant door (3, 4).

## Revendications

1. Appareil ménager (1) comprenant un corps (2) et une porte (3, 4) reliée au corps (2), et en outre un mécanisme d'ouverture (5) agissant sur la porte et au moins un capteur de proximité (6, 7) dont le signal de commande peut être utilisé pour la commande du mécanisme d'ouverture (5),
dans lequel le capteur de proximité (6, 7) est un capteur radar qui est caché optiquement,
**caractérisé en ce que**
le capteur radar (6, 7) est disposé sur le côté inférieur (9) de la porte (3, 4) ou sur le côté inférieur de l'appareil ménager (1) équipé de la porte (3, 4).

2. Appareil ménager selon la revendication 1,
**caractérisé en ce que**
la porte (3, 4) comprend une face extérieure (8) dépourvue de poignée.

3. Appareil ménager selon l'une des revendications précédentes,
**caractérisé en ce que**
le capteur radar (6, 7) fait partie d'un radar Doppler.

4. Appareil ménager selon l'une des revendications précédentes,
**caractérisé en ce que**
le capteur radar (6, 7) est logé dans un boîtier (10).

5. Appareil ménager selon l'une des revendications précédentes,
**caractérisé en ce que**
la zone de détection (11) du capteur radar (6, 7) est comprise entre 0,5 mm et 200 mm.

6. Appareil ménager selon l'une des revendications précédentes,
**caractérisé en ce**
**qu'**un capteur radar (6, 7) individuel est approprié à la commande de plusieurs portes (3, 4) en fonction du sens de déplacement détecté.

7. Appareil ménager selon l'une des revendications 1 à 5,
**caractérisé en ce que**
la porte (3, 4) comporte plusieurs capteurs radar (6, 7) disposés de manière espacée les uns des autres sur le côté inférieur (9) de la porte (3, 4) et/ou sur le côté inférieur de l'appareil ménager (1) équipé de la porte (3, 4).

8. Appareil ménager selon l'une des revendications précédentes,
**caractérisé en ce que**
l'appareil ménager est un appareil frigorifique, une machine à laver, un sèche-linge ou une cuisinière.

9. Procédé d'ouverture automatisée d'au moins une porte (3, 4) d'un appareil ménager (1) selon l'une des revendications précédentes, **caractérisé par** les étapes de procédé suivantes :
- approche d'une personne de la porte (3, 4),
- déplacement d'un objet ou d'un membre (12) dans la zone de détection (11) du capteur radar (6, 7) pour produire un signal de commande,
- utilisation de ce signal de commande pour l'activation du mécanisme d'ouverture (5).

10. Procédé selon la revendication 9,
**caractérisé en ce que**
des mécanismes d'ouverture (5) de plusieurs portes (3, 4) peuvent être commandés indépendamment les uns des autres par seulement un capteur radar (6, 7) commun, par le fait que, pour chaque sens de déplacement de l'objet ou d'un membre (12), un sens de déplacement respectif est détecté, de telle sorte que le signal de commande ainsi produit commande le mécanisme d'ouverture (5), correspondant à cet effet, d'une porte (3 ou 4) respective.

11. Procédé selon la revendication 9 ou 10,
**caractérisé en ce que**
plusieurs capteurs radar (6, 7) sont présents sur le côté inférieur (9) de la porte (3, 4) ou sur le côté inférieur de l'appareil ménager (1), chacun des capteurs radar (6, 7) servant à la commande d'un mécanisme d'ouverture (5) respectif d'une porte (3, 4) respective.
